# EUROPÄISCHE PATENTSCHRIFT

(11) **EP 0 358 208 B1**
(45) Veröffentlichungstag und Bekanntmachung des Hinweises auf die Patenterteilung: **02.03.1994**
(21) Anmeldenummer: 89116489.9
(22) Anmeldetag: 07.09.1989
(51) Int. Cl.: C09K 19/40, C08G 77/38

(54) **(Meth)acryloxygruppen enthaltende flüssigkristalline Polyorganosiloxane**
Liquid crystal polyorganosiloxanes containing (meth)acryloxy groups
Polyorganosiloxanes liquides cristallins contenant des groupes (méth) acryloxy

(30) Priorität: 08.09.1988 DE 3830592
(43) Veröffentlichungstag der Anmeldung: 14.03.1990
(73) Patentinhaber: Consortium für elektrochemische Industrie GmbH, D-81379 München (DE)
(72) Erfinder: Andrejewski, Dirk, Dr. Dipl.-Chem., D-8000 München 70 (DE); Gohary, Magdi, D-8000 München 90 (DE); Luckas, Hans-Joachim, D-8000 München 21 (DE); Winkler, Rainer, D-8000 München 83 (DE); Kreuzer, Franz-Heinrich, Dr. Dipl.-Chem., D-8033 Martinsried (DE)

(56) Entgegenhaltungen:
- EP-A- 0 066 137
- EP-A- 0 202 594
- EP-A- 0 266 895
- DE-A- 2 944 591

## Beschreibung

Die vorliegende Erfindung betrifft Acryloxy- und/oder Methacryloxygruppen enthaltende flüssigkristalline Polyorganosiloxane, ein Verfahren zu deren Herstellung sowie ein Verfahren zu deren Vernetzung und auf diese Weise herstellbare vernetzte flüssigkristalline Polyorganosiloxane.

(Meth)acryloxygruppen enthaltende flüssigkristalline Polyorganosiloxane sind grundsätzlich bekannt. In EP-B-0 066 137 ist die Herstellung solcher Polymere durch Addition von Acryl- oder Methacrylsäureallylester an Organo-Wasserstoff-Polysiloxane beschrieben.

Aus der EP-A-0 266 895 ist bekannt, Organosiloxane mit Alkenen umzusetzen, welche einen als Dioxolan geschützten 1,2-Dihydroxirest aufweisen und nach Abspaltung der Schutzgruppe das Reaktionsprodukt mit (Meth)acrylsäure bzw. deren Estern, Anhydriden oder Halogeniden umzusetzen.

Aus der DE-A-29 44 591 sind flüssigkristalline Polyorganosiloxane bekannt, deren Seitenketten aus mesogenen Molekülen, insbesondere 4-Propen-2-oxy-4'-methoxy-Phenylester, gebildet werden.

Methacryloxy- und Acryloxygruppen werden in flüssigkristalline Polyorganosiloxane eingeführt, damit letztere dreidimensional vernetzt werden können. Diese Vernetzung kann durch beispielsweise radikalische oder ionische Reaktion an den ethylenischen Doppelbindungen der (Meth)acryloxygruppen stattfinden. Um ein hochgradig dreidimensional vernetztes flüssigkristallines Polyorganosiloxan erhalten zu können, ist es deshalb erwünscht, einen möglichst hohen Anteil an (Meth)acryloxygruppen in das Polyorganosiloxan einzuführen.

Werden jedoch gemäß dem oben genannten Stand der Technik flüssigkristalline Polyorganosiloxane mit hohem Gehalt an (Meth)acryloxygruppen hergestellt, so lassen sich mit diesen Materialien nach deren Orientierung nur trübe und rauhe Filme herstellen.

Aufgabe der vorliegenden Erfindung war es, (meth)acryloxyfunktionelle flüssigkristalline Polyorganosiloxane und diese enthaltende Zusammensetzungen bereitzustellen, die auch bei hohem Anteil an (Meth)acryloxygruppen nicht trübe sind. Ferner war es Aufgabe der vorliegenden Erfindung, Polyorganosiloxane der vorstehend genannten Art bereitzustellen, aus denen sich glatte Filme herstellen lassen. Ebenso war es Aufgabe der vorliegenden Erfindung, hochgradig dreidimensional vernetzte, klare flüssigkristalline Polyorganosiloxane bereitzustellen.

Die vorstehend genannten Aufgaben werden durch die vorliegende Erfindung gelöst durch ein Verfahren zur Herstellung von Methacryloxy- und/oder Acryloxygruppen aufweisenden flüssigkristallinen Polyorganosiloxanen durch Umsetzung von Organosiloxanen und/oder zu Organosiloxanen kondensierbaren Organosilanen mit jeweils direkt an Siliciumatome gebundenen Wasserstoffatomen mit mesogene Gruppen aufweisenden Alkenen und/oder Alkinen, **dadurch gekennzeichnet**, daß man die genannten Organosiloxane zur Einführung der Methacryloxy- und/oder Acryloxygruppen in einem ersten Schritt mit Alken und/oder Alkin mit mindestens einer durch eine an sich bekannte Schutzgruppe geschützten nicht enolischen Hydroxylgruppe umgesetzt und in einem zweiten Schritt die genannte(n) Schutzgruppe(n) entfernt und die nunmehr freie(n) Hydroxylgruppe(n) auf an sich bekannte Weise mit (Meth)-acrylsäure, deren Estern, Anhydriden und/oder Halogeniden verestert und gegebenenfalls die zu Organosiloxanen kondensierbaren Organosilane kondensiert.

Bei den vorstehend genannten Organosiloxanen mit direkt an Siliciumatome gebundenen Wasserstoffatomen handelt es sich vorzugsweise um solche, die aus Einheiten der Formel (I) aufgebaut sind :

[RₚH_{q}SiO_{(4-p-q)/2}] **(I),**

worin
- **R**: gleiche oder verschiedene, gegebenenfalls substituierte C₁- bis C₁₈-Kohlenwasserstoffreste,
- **p**: eine ganze Zahl im Wert von 0 bis 3 und einem durchschnittlichen Wert von 1,8 bis 2,2,
- **q**: eine ganze Zahl im Wert von 0 bis 3 mit einem durchschnittlichen Wert, der so bemessen ist, daß mindestens drei direkt an Siliciumatome gebundene Wasserstoffatome pro Molekül zugegen sind,
und die Summe von p und q maximal 3 beträgt.

Beispiele für unsubstituierte Reste **R** sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Oktadecylreste, wie der n-Oktadecylrest; Alkenylreste, wie der Vinyl- und der Allylrest; Cycloalkylreste, wie Cyclopentyl-, Cyclohexyl-, Cycloheptylreste und Methylcyclohexylreste; Arylreste, wie der Phenyl- Naphtyl- und Anthryl- und Phenanthrylrest; Alkarylreste, wie o-, m-, p-Tolylreste, Xylylreste und Ethylphenylreste; Aralkylreste, wie der Benzylrest, der α-und der ß-Phenylethylrest;

Beispiele für substituierte Reste **R** sind Cyanalkylreste, wie der ß-Cyanethylrest, und halogenierte Kohlenwasserstoffreste, beispielsweise Halogenalkylreste, wie der 3,3,3-Trifluor-n-propylrest, der 2,2,2,2′,2′,2′-Hexafluorisopropylrest, der Heptafluorisopropylrest, und Halogenarylreste, wie der o-, m-, und p-Chlorphenylrest.
Vorzugsweise bedeutet R jeweils einen gegebenenfalls halogenierten Kohlenwasserstoffrest mit 1 bis 18, insbesondere 1 bis 10 Kohlenstoffatomen.

Besonders bevorzugt als Reste R sind C₁- bis C₄-Alkylreste und Phenylreste, insbesondere Methylreste.

Besonders bevorzugt als Siloxane der Formel (I) sind solche. die zu mindestens 90% ihrer Einheiten aus solchen der Formeln

[(CH₃)₂SiO] **(II)**, [(CH₃)HSiO] **(III)** , [H(CH₃)₂SiO_{1/2}] **(IV)**

und [(CH₃)₃SiO_{1/2}] **(V)**

aufgebaut sind.

Bei den vorgenannten, zu Organosiloxanen kondensierbare Organosilane mit direkt an Siliciumatome gebundenen Wasserstoffatomen handelt es sich vorzugsweise um solche der Formel (VI)

RᵣHₛSiY₍₄₋ᵣ₋ₛ₎ **(VI)**

oder deren Mischungen, wobei in Formel (VI) R die für Formel (I) angegebene Bedeutung hat und
- **Y**: eine kondensierbare Gruppe, vorzugsweise eine C₁-bis C₄-Alkoxygruppe oder ein Halogenatom,
- **r**: eine ganze Zahl im Wert von 0 bis 3,
- **s**: eine ganze Zahl im Wert von 0 bis 3, mit einem durchschnittlichen Wert von mindestens 0,1 und die Summe von r und s maximal 3 beträgt, bedeutet

Vorzugsweise bedeutet Y ein Chloratom oder eine Methoxy- oder Ethoxygruppe. Vorzugsweise beträgt der Wert von s maximal 1.

Als mesogene Gruppen aufweisende Alkene bzw. Alkine können alle solche Verbindungen eingesetzt werden, die auch bisher zur Herstellung flüssigkristalliner Organo(poly)siloxane durch Anlagerung von mesogene Gruppen enthaltenden ethylenisch bzw. acetylenisch ungesättigten, mesogene Gruppen enthaltenden Verbindungen an direkt an Siliciumatome gebundene Wasserstoffatome von Organosilanen und Organo(poly)siloxanen hergestellt werden konnten.

Der Begriff "mesogene Gruppen" ist in der Fachwelt gut bekannt. Es sind dies diejenigen Gruppen, die in einem Molekül flüssigkristalline Eigenschaften hervorrufen können. Mesogene Gruppen sind u.a. von Dietrich Demus et al. ("Flüssige Kristalle in Tabellen", VEB Deutscher Verlag für Grundstoffindustrie, Leipzig, 1974 ) beschrieben, wobei die dort genannten mesogenen Gruppen zum Inhalt der Offenbarung der hier beschriebenen Erfindung zu rechnen sind.

Beispiele für mesogene Gruppen sind Derivate des Cyclohexans, wie Cyclohexylcarbonsäurecyclohexylester, Cyclohexylcarbonsäurephenylester, Cyclohexylphenylether, Cyclohexylbenzole, Dicyclohexylderivate, Derivate des Stilbens, Benzoesäurephenylester und seine Derivate, Steroide, wie Cholesterin, dessen Derivate, wie Cholesterinester, Cholestan und dessen Derivate, Benzylidenaniline, Azobenzol und seine Derivate, Azoxybenzol und dessen Derivate, Alkyl- und Alkoxyderivate von Biphenyl, Schiff'sche Basen.

Oftmals ist es aus anwendungstechnischen Gründen erwünscht, daß die mesogenen Gruppen polare Funktionen, wie beispielsweise die Nitrilgruppe, enthalten, um im Flüssigkristall einen hohen dielektrischen Anisotropieeffekt zu erzielen.

Als im erfindungsgemäßen Verfahren einsetzbare, mesogene Gruppen aufweisende Alkene bzw. Alkine sind diejenigen der Formel (VII) bevorzugt :

CₙHₘ-(X¹ₐ-A¹_{b}-A²_{c})_{d}-Zₑ-(-X²_{f}-A³_{g}-A⁴ₕ-)ᵢ-A⁵ₖ **(VII),**

worin
- **n**: eine ganze Zahl im Wert von 1 bis 20,
- **m**: den Wert von 2n besitzt, oder, falls n mindestens 2 bedeutet, auch den Wert von (2n-2) bedeuten kann,
- **X¹** und **X²**: gleiche oder verschiedene zweibindige Reste aus der Gruppe -O-, -COO-, -CONH-, -CO-, -S-, -C≡C-, -CH=CH-, -CH=N-, -N=N- und -N=N(O)-,
- **A¹, A², A³** und **A⁴**: gleiche oder verschiedene zweibindige Reste, nämlich 1,4-Phenylen-, 1,4-Cyclohexylenreste, substituierte Arylene mit 1 bis 10 Kohlenstoffatomen, substituierte Cycloalkylene mit 1 bis 10 Kohlenstoffatomen und Heteroarylen mit 1 bis 10 Kohlenstoffatomen,
- **Z**: gleiche oder verschiedene zwei- bis vierbindige Benzol- Cyclohexan- oder Cyclopentanreste,
- **A⁵**: gleiche oder verschiedene, gesättigte oder olefinisch ungesattigte Alkyl-, Alkoxy- oder Cycloalkylreste mit jeweils 1 bis 16 Kohlenstoffatomen, Cholestanreste, Cholesterylreste, Halogenatome, Wasserstoffatome, Hydroxyl-, Nitril- und Trialkylsiloxygruppen, deren jeweils Alkylreste 1 bis 8 Kohlenstoffatome besitzen,
- **a, b, c, d, f, g, h, i** und **k**: jeweils gleiche oder verschiedene ganze Zahlen im Wert von 0 bis 3, die Summe a+b+c+d+e+f+g+h+i+k mindestens 2 und die Summe von d und i maximal 4 beträgt und
- **e**: eine Zahl im Wert von 0 oder 1,
bedeuten.

Die Reste X¹ und X² können, falls sie nicht symmetrisch gebaut sind, mit jedem ihrer Enden an jedem ihrer Bindungspartner verbunden sein. So kann beispielsweise in der obigen Formel (VII) und in den unten aufgeführten Formeln der Rest -COO- auch als -OOC-, der Rest -CONH- auch als -NHCO-, -CH=N- auch als -N=CH- gebunden sein.

Als Substituenten für die substituierten Arylene und Cycloalkylene A¹, A², A³ und A⁴ sind Halogenatome, C₁- bis C₄-Alkoxyreste, Nitro- und Cyanogruppen, C₁- bis C₆-Alkylreste, Carboxy-(C₁- bis C₄-Alkyl)-Reste und Tri-(C₁- bis C₄-Alkyl)-Siloxyreste bevorzugt.

Vorzugsweise hat n einen Wert von 2 bis 5 und vorzugsweise hat m den Wert 2n.

Beispiele für Reste A⁵ sind Alkylreste, wie der Methyl-, Ethyl-, n- Propyl-, iso-Propyl-, n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Oktylreste, wie der n-Octylrest und iso-Oktylreste, wie der 2,2,4-Trimethylpentylrest, Nonylreste, wie der n-Nonylrest, Decylreste, wie der n-Decylrest, Dodecylreste, wie der n-Dodecylrest, Hexadecylreste, wie der n-Hexadecylrest; Alkenylreste, wie der Vinyl- und der Allylrest, Butenyl-, Pentenyl-, Hexenyl-, Heptenyl-, Oktenyl-, Oktadienyl-, Decenyl-, Dodecenyl- und Hexadecenylreste; Cycloalkylreste, wie Cyclopentyl-, Cyclohexyl-, Cycloheptylreste und Methylcyclohexylreste; Alkyloxyreste, wie der Methoxy-, Ethoxy-, n-Propoxy-, Isopropoxy-, n-, sec.- und tert.-Butoxyrest, Pentoxy-, Hexoxy-, Oktoxy-, Decoxy-, Hexadecoxyreste; Alkenoxyreste, wie der Allyloxyrest, Butenyloxy-, Pentenyloxy-, Hexenyloxy-, Oktenyloxy-, Decenyloxy-und Hexadecenyloxyreste; Cycloalkylreste, wie der Cyclopentyl-, Cyclohexyl-, Cycloheptylrest; Cycloalkenylreste, wie Cyclopentenyl-, Cyclohexenyl- und Cycloheptenylreste; Cholestanreste; der Cholesterylrest; Fluor-, Chlor- oder Bromatome; Wasserstoffatome; Hydroxyl-, Nitril-, und Trimethylsilyl-, Triethylsilylgruppen.
Es ist ganz besonders bevorzugt, daß -CₙHₘ -(X¹ₐ-A¹_{b}-A²_{c})_{d}-in der obigen Formel (VII) einen Rest der Formel (VIII): 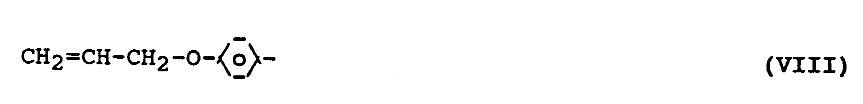
bedeutet.

Insbesondere bevorzugt als Verbindungen der Formel (VII) sind diejenigen der Formel (IX) : 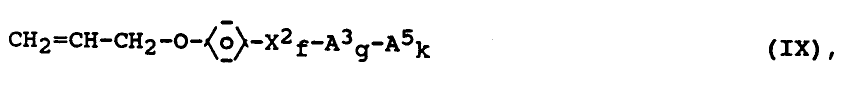
worin X², A³, A⁵, f, g und k die für Formel (VII) angegebenen Bedeutungen haben und vorzugsweise f den Wert 1, g entweder 0 oder 1 und k 1 besitzt.

Im erfindungsgemäßen Verfahren kann als Alken und/oder Alkin mit mindestens einer durch eine an sich bekannte Schutzgruppe geschützten nicht enolischen Hydroxylgruppe jede Verbindung der oben genannten Art eingesetzt werden, welche an direkt an Siliciumatome gebundene Wasserstoffatome aufweisende Organosiliciumverbindungen addiert werden können und deren Hydroxylgruppe sich nach Entfernen der Schutzgruppe verestern läßt.

Wegen der leichteren Zugänglichkeit sind Alkene vor Alkinen bevorzugt.
Schutzgruppen für Hydroxylgruppen sind sehr gut bekannt und u.a. in Houben-Weyl, Methoden der organischen Chemie, 4. Auflage, Band VI/1b Alkohole III, Georg Thieme Verlag, Stuttgart auf den Seiten 735 ff. beschrieben. So kann das Wasserstoffatom der Hydroxylgruppe beispielsweise durch eine tert.-Butyl-, Benzyl, Triphenylmethyl-, Trialkylsilyl-, Formaldehydacetal-, Acetaldehydacetal-, O,N-Acetal-, O,O-Acetal-, Carbonsäureester-, wie Chloressigsäureester-, Orthoestergruppe ersetzt sein. Die chemische Natur der Schutzgruppe spielt im erfindungsgemäßen Verfahren an sich keine Rolle. Entscheidend ist, daß die Schutzgruppe während der Anlagerung des Alkens und/oder Alkins an direkt an Siliciumatome gebundene Wasserstoffe stabil ist, sich aber nach dieser Reaktion unter für das Produkt im wesentlichen inerten Bedingungen entfernen läßt.

Im erfindungsgemäßen Verfahren sind säurelabile Schutzgruppen bevorzugt, insbesondere die Tri-(C₁- bis C₄-Alkyl)-Silylgruppe, die tert.-Butyl-, Triphenylmethyl- und die Ameisensäureorthoestergruppe, speziell die Tri-(C₁- bis C₄-Alkyl)-Silylgruppe.

Als Alken und/oder Alkin mit mindestens einer durch eine an sich bekannte Schutzgruppe geschützte nicht enolischen Hydroxylgruppe ist insbesondere ein Alken mit bis zu 30 Kohlenstoffatomen und einer durch eine Schutzgruppe blockierten nicht enolischen Hydroxylgruppe bevorzugt, wobei das Alken neben Kohlenstoffatomen und Wasserstoffatomen noch weitere Atome besitzen kann, vorzugsweise Sauerstoffatome, und diese Sauerstoffatome auch die Kohlenstoffkette des Alkens in Art einer Ether- und/oder Esterbindung unterbrechen können.

Ganz besonders bevorzugt als Alkene mit blockierter Hydroxylgruppe sind solche der Formel (X) :

CH₂=CH-R˝-O-SiR′₃ **(X)**,

worin
- **R′**: gleiche oder verschiedene C₁- bis C₄-Alkylreste, vorzugsweise Methylreste und
- **R˝**: einen zweiwertigen Rest aus der Gruppe der Verbindungen der Formel (XI) und (XII) :

-CₜH₂ₜ- **(XI)**

und

-CH₂-A¹-X¹-A²- **(XII)**,

worin
- **t**: eine ganze Zahl im Wert von 1 bis 18 und
- A¹ ,A² und X¹: die für Formel (VII) angegebenen Bedeutungen besitzen. Als Bedeutung für A¹ und A² in der obigen Formel (XII) sind insbesondere 1,4-Phenylenreste bevorzugt.

Die erfindungsgemäße Umsetzung sowohl der mesogene Gruppen aufweisenden Alkene und/oder Alkine als auch der Alkene und/oder Alkine mit mindestens einer durch eine an sich bekannte Schutzgruppe geschützten Hydroxylgruppe mit Organosiloxanen und/oder Organosilanen erfolgt vorzugsweise in Gegenwart eines Platinmetalle und/oder deren Verbindungen enthaltenden Katalysators. Bevorzugt als Platinmetalle und/oder deren Verbindungen sind Platin und/oder dessen Verbindungen. Es können hier alle Katalysatoren eingesetzt werden, die auch bisher zur Addition von direkt an Si-Atome gebundenen Wasserstoffatomen an aliphatisch ungesättigte Verbindungen eingesetzt wurden. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z. B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, insbesondere Platin-Divinyltetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin, oder Ammonium-Platinkomplexe gemäß EP-B 110 370.

Platinkatalysator wird vorzugsweise in Mengen 0,5 bis 500 Gewichts-ppm (Gewichtsteilen je Million Gewichtsteilen), insbesondere 2 bis 400 Gewichts-ppm, jeweils berechnet als elementares Platin und bezogen auf das Gesamtgewicht der in der Reaktionsmischung vorliegenden direkt an Siliciumatome gebundene Wasserstoffatome aufweisenden Silanen und/oder Siloxanen, eingesetzt.

Die Umsetzung von Organosiloxanen und/oder zu Organosiloxanen kondensierbaren Organosilanen mit jeweils direkt an Silicium gebundenen Wasserstoffatomen mit mesogene Gruppen aufweisenden Alkenen und/oder Alkinen einerseits und mit Alken und/oder Alkin mit mindestens einer durch eine an sich bekannte Schutzgruppe geschützten Hydroxylgruppe andererseits kann gleichzeitig oder nacheinander in beliebiger Reihenfolge erfolgen. Vorzugsweise erfolgt sie gleichzeitig.

Die genannte Umsetzung (nachfolgend Hydrosilylierung genannt) kann in Abwesenheit oder in Anwesenheit von Lösungsmittel erfolgen, wobei die Anwesenheit von Lösungsmittel bevorzugt ist.
Falls Lösungsmittel verwendet werden, sind Lösungsmittel oder Lösungsmittelgemische, welche unter den Reaktionsbedingungen weitgehend inert sind und insbesondere solche mit einem Siedepunkt bzw. Siedebereich von bis zu 120° C bei 0,1 MPa bevorzugt. Beispiele für solche Lösungsmittel sind Ether, wie Dioxan, Tetrahydrofuran, Diethylether, Diethylenglycoldimethylether; chlorierte Kohlenwasserstoffe, wie Dichlormethan, Trichlormethan, Tetrachlormethan, 1,2-Dichlorethan, Trichlorethylen; Kohlenwasserstoffe, wie Pentan, n-Hexan, Hexan-Isomerengemische, Heptan, Oktan, Waschbenzin, Petrolether, Benzol, Toluol, Xylole; Ketone, wie Aceton, Methylethylketon, Methyl-isobutylketon; Schwefelkohlenstoff und Nitrobenzol, oder Gemische dieser Lösungsmittel.

Die Bezeichnung Lösungsmittel bedeutet nicht, daß sich alle Reaktionskomponenten in diesem lösen müssen. Die Reaktion kann auch in einer Suspension oder Emulsion eines oder mehrerer Reaktionspartner durchgeführt werden . Die Reaktion kann auch in einem Lösungsmittelgemisch mit einer Mischungslücke ausgeführt werden, wobei in jeder der Mischphasen jeweils mindestens ein Reaktionspartner löslich ist.

Die Hydrosilylierung kann beim Druck der umgebenden Atmosphäre, also etwa 0,1 MPa (abs.), sie kann auch bei höheren oder bei niedrigeren Drücken durchgeführt werden. Bevorzugt sind Drücke von 0,01 MPa (abs.) bis 1,0 MPa (abs.), insbesondere von 0,09 MPa (abs.) bis 0,11 MPa (abs.) durchgeführt.

Vorzugsweise wird die Hydrosilylierung bei Temperaturen von 0 °C bis 150 °C, insbesondere von 60 °C bis 100 °C durchgeführt.

Vorzugsweise werden 0,1 bis 10 Mol, insbesondere 0,5 bis 2 Mol von Verbindungen der Formeln (VII) und (X) pro Grammatom direkt an Siliciumatome gebundene Wasserstoffatome bei der Hydrosilylierung eingesetzt.

Vorzugsweise beträgt das Molverhältnis von eingesetzter Verbindung der Formel (VII) mit Ausnahme von Verbindung der Formel (X) zu eingesetzter Verbindung der Formel (X) von 0,01 bis 99, insbesondere 0,1 bis 10, speziell 0,5 bis 2.

Das Produkt der Hydrosilylierung muß nicht - und wird vorzugsweise nicht - aus der Reaktionsmischung isoliert werden. Die anschließenden Reaktionsschritte - Abspaltung der Schutzgruppe und Veresterung der nun ungeschützten Hydroxylgruppe - wird vorzugsweise in demselben Reaktionsgefäß wie die Hydrosilylierung durchgeführt (Eintopfreaktion).

Die Reaktionsbedingungen für die Abtrennung der Schutzgruppe hängen vom Typ der gewählten Schutzgruppe ab und sind hinreichend bekannt. Sie sind unter anderem in dem oben aufgeführten Zitat aus Houben-Weyl und in den dort zitierten Textstellen angegeben. Die Tri-(C₁- bis C₄-alkyl-)silylgruppe, welche, wie oben erwähnt, als Schutzgruppe bevorzugt ist, wird vorzugsweise unter Katalyse von Säuren oder Basen entfernt. Als Säuren und Basen können jede bekannten Säuren und Basen verwendet werden, welche sich dem übrigen Teil des gewünschten Reaktionsprodukts gegenüber im Wesentlichen inert verhalten.

Beispiele für Säuren sind Lewis-Säuren, wie BF₃, AlCl₃, TiCl₃, SnCl₄, SO₃, PCl₅, POCl₃, FeCl₃ und dessen Hydrate und ZnCl₂; Brönstedt-Säuren, wie Salzsäure, Bromwasserstoffsäure, Schwefelsäure, Chlorsulfonsäure, Phosphorsäuren, wie ortho-, meta- und Polyphosphorsäuren, Borsäure, selenige Säure, Salpetersäure, Essigsäure, Propionsäure, Halogenessigsäuren, wie Trichlor- und Trifluoressigsäure, Oxalsäure, p-Toluolsulfonsäure, saure Ionenaustauscher, saure Zeolithe, säureaktivierte Bleicherde, säureaktivierter Ruß, Fluorwasserstoff, Chlorwasserstoff und dergleichen mehr.

Beispiele für Basen sind Lewis-Basen wie Ammoniak, Amine und Cyanid; Brönstedt-Basen, Wie NaOH, KOH, CsOH, Tri(C₁- bis C₄-alkyl-)ammoniumhydroxide, Tetra-n-butylphosphoniumhydroxid, Mg(OH)₂, Ca(OH)₂, Carbonate und Hydrogencarbonate von Li, Na, K, Rb, Cs, Mg, Ca, Sr und Ba und dergleichen mehr. Wegen der leichten Zugänglichkeit sind NaOH und KOH als Basen und Salz- und Schwefelsäure als Säuren bevorzugt. Die Basen können in Substanz oder gelöst in einem Lösungsmittel, vorzugsweise Methanol oder Ethanol, eingesetzt werden. Die Abspaltung der oben erwähnten Trialkylsiloxygruppen wird vorzugsweise bei erhöhter Temperatur, insbesondere bei Temperaturen von 30 °C bis 150 °C, speziell von 60 °C bis 90 °C durchgeführt. Drücke von 0,09 bis 0,11 MPa (abs.) sind bevorzugt.

Vorzugsweise werden während der Abspaltung der oben erwähnten Trialkylsiloxygruppen niedrigsiedende Komponenten aus dem Reaktionsgemisch entfernt.

Die nachfolgende Veresterung kann mit jedem Derivat der Acrylsäure und/oder Methacrylsäure durchgeführt werden, welche auch bisher zur Veresterung von Hydroxylgruppen eingesetzt worden sind. Dies sind insbesondere die Ester, Anhydride und/oder Halogenide dieser Säuren. Bevorzugt sind die Chloride und die Anhydride, speziell die Anhydride der vorstehend genannten Säuren.

Vorzugsweise werden von 0,1 bis 100 Äguivalente, insbesondere von 1 bis 2 Äquivalente der genannten Derivate der (Meth)acrylsäure pro zu veresternder Hydroxylgruppe eingesetzt.

Alle der vorstehend oder nachstehend genannten Reaktionspartner, Katalysatoren, Lösungsmittel, Photoinitiatoren, UV-Licht-Quellen etc. können einzeln oder im Gemisch eingesetzt werden. Es können z.b. jeweils eine Verbindung der Formeln (I), (VI), (VII), (X), (XIII), ein Platin-Katalysator, ein Lösungsmittel usw., es können auch jeweils Gemische der vorstehend genannten Substanzen bzw. Geräte eingesetzt werden.

Werden im vorstehend geschilderten Verfahren Organosilane der Formel (VI) eingestzt, so können diese anschließend nach an sich bekannten Verfahren zu flüssigkristallinen Organopolysiloxanen polykondensiert werden. Dies kann u.a. durch Umsetzung mit Säuren, wie wäßriger Salzsäure, erfolgen. Derartige Verfahren sind beschrieben in W.Noll: Chemistry and Technology of Silicones, Academic Press, Orlando Fla., 1968, Seite 191 bis 239.

Die erfindungsgemäßen und gemäß dem oben geschilderten erfindungsgemäßen Verfahren herstellbaren Methacryloxy- und/oder Acryloxygruppen aufweisenden flüssigkristallinen Polyorganosiloxane können dreidimensional vernetzt werden. Diese Vernetzung wird vorzugsweise mittels freier Radikale bewirkt, welche durch Peroxide, durch UV-Licht oder durch energiereichere elektromagnetische Strahlung als UV-Licht, oder thermisch erzeugt werden. Die Vernetzung kann aber auch mittels direkt an Siliciumatome gebundene Wasserstoffatome enthaltenden Vernetzern unter Katalyse durch die oben genannten Platinmetallkatalysatoren bewirkt werden. Sie kann auch kationisch oder anionisch erfolgen. Besonders bevorzugt ist die Vernetzung durch UV-Licht.

Unter UV-Licht in diesem Sinne ist elektromagnetische Strahlung mit einer Wellenlänge von 13 nm bis 400 nm, insbesondere von 100 nm bis 400 nm, zu verstehen. Unter Vernetzung durch UV-Licht ist in diesem Fall die Vernetzung mit Hilfe einer Strahlungsquelle zu verstehen, welche eine größere Intensität an UV-Licht als das normale Sonnenlicht am Erdboden besitzt. Als UV-Strahlungsquellen sind solche mit einem Intensitätsmaximum im Bereich von 200 nm bis 400 nm bevorzugt. Solche UV-Lampen sind im Handel erhältlich.

Vorzugsweise enthalten die erfindungsgemäßen, durch UV-Licht vernetzbaren Zusammensetzungen neben den erfindungsgemäßen flüssigkristallinen Organopolysiloxanen noch Verbindungen der Formel (XIII) :

CH₂=CQ-COO-(R'''')ᵤ-(X¹ₐ-A¹_{b}A²_{c})_{d}-Zₑ-(-X²_{f}-A³_{g}-A⁴ₕ-)ᵢ-A⁶ₗ **(XIII),**

worin
- **A⁶**: eine der Bedeutungen von A⁵ besitzt oder ein Rest der Formel CH₂=CQ-COO-(R'''')ᵤ- ist,
- **Q**: ein Wasserstoffatom oder eine Methylgruppe bedeutet,
- **R''''**: gleiche oder verschiedene zweibindige Reste aus der Gruppe -CH₂-, -O-CH₂-, -O-CH₂-CH₂-, -O-CH₂-CH₂-CH₂- sind,
- **u**: eine ganze Zahl im Wert von 0 bis 20,
- **l**: 0 oder 1 ist und
X¹, X², A¹, A², A³, A⁴, A⁵, a, b, c, d, e, f, g, h, i und k die für Formel (VII) angegebenen Bedeutungen haben.

Vorzugsweise enthalten die erfindungsgemäßen, durch UV-Licht vernetzbare Massen Verbindung(en) der Formel (XIII) in Mengen von 0,1 Gewichtsteilen bis 90 Gewichtsteilen, insbesondere von 5 Gewichtsteilen bis 50 Gewichtsteilen, jeweils bezogen auf das Gewicht der eingesetzten erfindungsgemäßen flüssigkristallinen Organopolysiloxane.

Die Verbindungen der Formel (XIII) dienen in erster Linie zur Senkung der Viskosität der erfindungsgemäßen Zusammensetzung.
Bevorzugt als Verbindungen der Formel (XIII) sind solche der Formel (XIV) : 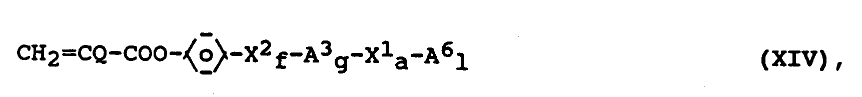
worin Q ein Wasserstoffatom oder eine Methylgruppe bedeutet und X¹, X², A³, A⁶, a, f, g und l die für Formel (VII) angegebenen Bedeutungen haben und vorzugsweise f den Wert 1, a und g jeweils entweder 0 oder 1 besitzt.

Bevorzugt als Verbindungen der Formel (XIV) sind 4-Methacryloxybenzoesäure-4-(prop-2-en-1-oxy)phenylester, 4-(Prop-2-en-1-oxy)benzoesäure-(4-methacryloxy-)phenylester, 4-(Methacryloxy)benzoesäure-(4-methacryloxy-)phenylester und 4-(Propyl-1-oxy) benzoesäure-(4-methacryloxy)-phenylester.

Die erfindungsgemäßen Zusammensetzungen werden vorzugsweise in Anwesenheit von Photoinitiatoren und/oder Photosensibilisatoren durch UV-Licht vernetzt.

Geeignete Photoinitiatoren und Photosensibilisatoren sind jeweils gegebenenfalls substituierte Acetophenone, Propiophenone, Benzophenone, Anthrachinone, Benzile, Carbazole, Xanthone Thioxanthone, Fluorene, Fluorenone, Benzoine, Naphthalinsulfonsäuren und Benzaldehyde und Zimtsäuren.

Beispiele hierfür sind Fluorenon, Fluoren, Carbazol; Acetophenon; substituierte Acetophenone, wie 3-Methylacetophenon, 2,2′-Dimethoxy-2-phenylacetophenon, 4-Methylacetophenon, 3-Bromacetophenon, 4-Allylacetophenon, p-Diacetylbenzol, p-tert,-Butyltrichloracetophenon; Propiophenon; substituierte Propiophenone, wie 1-[4-(Methylthio)phenyl]-2-morpholin-propanon-1, Benzophenon; substituierte Benzophenone, wie Michlers Keton, 3-Methoxybenzophenon, 4,4′-Dimethylaminobenzophenon, 4-Methylbenzophenon, 4-Chlorbenzophenon, 4,4′-Dimethoxybenzophenon, 4-Chlor-4′-benzylbenzophenon; Xanthon; substituierte Xanthone, wie 3-Chlorxanthon, 3,9-Dichlorxanthon, 3-Chlor-8-nonylxanthon; Thioxanthon; substituierte Thioxanthone, wie Isopropenylthioxanthon; Anthrachinon; substituierte Anthrachinone, wie Chloranthrachinon und Anthrachino-1,5-disulfonsäuredinatriumsalz; Benzoin; substituierte Benzoine, wie Benzoinmethylether; Benzil; 2-Naphthalinsulfonylchlorid; Benzaldehyd; Zimtsäure.

Photinitiatoren und/oder Photosensibilisatoren sind in den erfindungsgemäßen Zusammensetzungen vorzugsweise in Mengen von 0,01 bis 10 Gewichts-%, insbesondere von 0,5 bis 5 Gewichtsprozent, jeweils bezogen auf das Gewicht des flüssigkristallinen Organopolysiloxans, eingesetzt.

Es ist weiterhin bevorzugt, den erfindungsgemäßen Zusammensetzungen Polymerisationsinhibitoren zuzusetzen, und zwar insbesondere von 1 ppm bis 5 000 ppm, speziell von 100 bis 1 000 ppm, jeweils bezogen auf das Gesamtgewicht der Zusammensetzung.

Als Polymerisationsinhibitoren sind Dihydroxybenzole bevorzugt, welche gegebenenfalls mit C₁- bis C₆-Alkylgruppen am Ring substituiert oder an einem oder beiden Hydroxylgruppen verethert sind. Beispiele für solche Polymerisationsinhibitoren sind Hydrochinon, p-Methoxyphenol und p-tert.-Butylbrenzkatechin. Ebenfalls wirksam als Polymerisationsinhibitoren sind Chinonderivate und Nitrosoverbindungen.

Die erfindungsgemäßen Zusammensetzungen können bis zu 50 Gewichts-%, vorzugsweise von 0,1 bis 10 Gewichtsprozent, jeweils bezogen auf das Gewicht der Zusammensetzung nicht mesogene Monomere und Oligomere enthalten. Beispiele für solche Monomere und Oligomere sind Ethandioldi(meth)acrylat, Hexandioldi(meth)acrylat, Diethylenglycoldi(meth)acrylat, Triethylen-glycoldi(meth)acrylat, Trimethylolpropantri(meth)acrylat und α,ω-Divinylsiloxane.

Ferner können die erfindungsgemäßen Zusammensetzungen bis zu 50% bezogen auf ihr Gewicht, insbesondere von 0,01 Gewichts% bis 30 Gewichts% an Füllstoffen enthalten.

Beispiele für Füllstoffe sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver; verstärkende Füllstoffe, also Füllstoffe mit einer BET-Oberfläche von mehr als 50 m²/g, wie pyrogen hergestellte Kieselsäure, gefällte Kieselsäure, Ruß, wie Furnace- und Acetylenruß und Silicium-Aluminium-Mischoxide großer BET-Oberfläche; faserförmige Füllstoffe, wie Asbest sowie Kunststoffasern. Die genannten Füllstoffe können hydrophobiert sein, beispielsweise durch die Behandlung mit Organosilanen bzw. -siloxanen oder durch Verätherung von Hydroxylgruppen zu Alkoxygruppen. Es kann eine Art von Füllstoff, es kann auch ein Gemisch von mindestens zwei Füllstoffen eingesetzt werden.

Des weiteren können die erfindungsgemäßen Zusammensetzungen weitere Stoffe enthalten, beispielsweise Pigmente, Weichmacher, Haftvermittler, weitere Polymere, Lösungsmittel, Emulgatoren, Rostschutzmittel, Stabilisatoren und andere, zumeist übliche Zusätze.

Vorzugsweise werden die erfindungsgemäßen Zusammensetzungen dadurch vernetzt, daß sie bei Temperaturen von -20°C bis +180°C, insbesondere bei +20°C bis +100°C auf ein Substrat aufgetragen und nach üblichen Methoden orientiert werden, beispielsweise durch Schmelzauftrag mittels eines Rakels oder durch elektrische oder magnetische Felder und anschließend der Strahlung einer UV-Lampe ausgesetzt werden.

Als Ausgangsstoffe für die erfindungsgemäßen Verbindungen und Zusammensetzungen eignen sich besonders die neuen Verbindungen der Formel (XV) 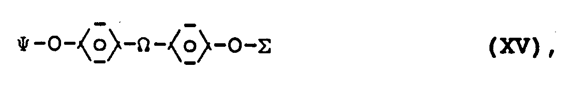
worin
- **Ψ**: ein Cholesterylrest oder ein Rest der Formel CH₂=CH-CH₂-,
- **Ω**: ein Carboxylrest der Formeln -COO- oder -OCO-
- **Σ**: ein Wasserstoffatom, eine C₁- bis C₆-Tri-(Kohlenwasserstoff)silylgruppe oder ein Rest der Formel CH₂=CQ-CO- und
- **Q**: ein Wasserstoffatom oder eine Methylgruppe sind.

Vorzugsweise bedeutet Q in Formel (XV) ein Wasserstoffatom. Vorzugsweise bedeutet der Rest Σ, falls er eine C₁- bis C₆-Tri-(Kohlenwasserstoff)silylgruppe ist, eine Trimethylsilylgruppe.

Die Synthese von fünf Verbindungen der Formel (XV) sind nachstehend vor Beispiel 1 unter A., B., C., D. und E beschrieben.

Die auf diese Weise erhältlichen erfindungsgemäßen dreidimensional vernetzten flüssigkristallinen Polyorganosiloxane lassen sich zur Herstellung von Membranen zum Trennen von Stoffgemischen (beispielsweise von Gasen wie Sauerstoff und Stickstoff) und zur gezielten Wirkstoffreigabe (beispielsweise von Arzneimitteln und Agrochemikalien), in der optischen Anzeige elektromagnetischer Felder (Optoelektronik), auf dem Gebiet der Informationsspeicherung, der elektrographischen Verfahren, der Lichtmodulation, als Bestandteil von Polarisationsfolien, optischen Filtern, Reflektoren, in Beschichtungen, als Lackpigmente und stationäre Phasen für die Gas- und Flüssigchromatographie.

Sie eignen sich insbesondere zur Beschichtung von Folien, Stoffen, Leder, Keramik, Holz, Metall oder Kunststoffen zu Dekorationszwecken.

In den nachfolgenden Beispielen sind, falls jeweils nicht anders angegeben,
a) alle Mengenangaben auf das Gewicht bezogen;
b)alle Drücke 0,10 MPa (abs.);
c)alle Temperaturen 20° C .

### Herstellung der neuen Ausgangsverbindungen gemäß Formel (XV):

### A. 4-(Prop-2-en-1-oxy)benzoesäure(4-hydroxyphenyl)ester.

Eine Lösung von 78,8 g 4-(Prop-2-en-1-oxy)benzoesäurechlorid (erhältlich gemäß DE-A 29 44 591) und 220,0 g Hydrochinon in 400 ml trockenem Tetrahydrofuran wurden 4 h lang unter Rückfluß gekocht. Nach dem Einengen wurde das Produkt aus Toluol und Ethanol (1:1 Volumenteile) umkristallisiert.

Schmelzpunkt : 146°C.

### B. 4-(Prop-2-en-1-oxy)benzoesäure(4-trimethylsiloxyphenyl)ester.

Zu einer Lösung von 66,0 g 4-(Prop-2-en-1-oxy)benzoesäure(4-hydroxyphenyl)ester (herstellbar gemäß A.) in 200 ml trockenem Toluol wurden bei 90°C 30,0 g Hexamethyldisilazan (käuflich erhältlich bei der Wacker-Chemie GmbH, D-8000 München) tropfenweise zugegeben und die so erhaltene Mischung 2 h lang unter Rückfluß gekocht. Die flüchtigen Bestandteile der Mischung wurden abdestilliert und das Rohprodukt aus Toluol und Hexan umkristallisiert.

Schmelzpunkt : 87°C.

### C. 4-Trimethylsilyloxybenzoesäure-4-(prop-2-en-1-oxy)phenylester

Zu einer Lösung von 75 g 4-(Prop-2-en-1-oxy)phenol (erhältlich gemäß Chemical Abstracts 66, 46 168b bzw. der dort referierten Literaturstelle) in 400 ml Toluol wurden bei 100° C unter Stickstoffatmosphäre innerhalb von 3.5 h 114 g 4-Trimethylsiloxybenzoesäurechlorid (erhältlich gemäß Chemical Abstracts 95, 150 756b bzw. der dort referierten Literaturstelle) zugetropft und anschließend weitere 6 Stunden unter Rückfluß gekocht. Nach dem Abkühlen wurde von eventuell ausgefallenen Produkten abfiltriert und das Filtrat vom Lösungsmittel befreit. Das Produkt verblieb als äußerst hydrolyseempfindliches Öl.

### D. 4-Methacryloxybenzoesäure-4-(prop-2-en-1-oxy)phenylester

Eine Lösung von 16.9 g 4-Trimethylsilyloxybenzoesäure-4-(prop-2-en-1-oxy)phenylester (herstellbar gemäß C.) in 15 ml Toluol und 10 ml Ethanol wurde 1 Stunde unter Rückfluß gekocht und anschließend von flüchtigen Bestandteilen im Vakuum befreit. Die verbliebenen 13.3g 4-Hydroxybenzoesäure-4-(prop-2-en-1-oxy)phenylester wurden zusammen mit 30 g Methacrylsäureanhydrid und 1.2 g-Toluolsulfonsäure in 15 ml Tolual gelöst und 1 h auf 100° C erwärmt. Nach dem Abkühlen wurde das Produkt mit Hexan ausgefällt und aus Ethanol umkristallisiert. Die thermodynamischen Daten sind in Tabelle 1 zusammengefaßt.

### E. 4-Methacryloxybenzoesäurecholesterinester

9.5 g 4-Hydroxybenzoesäurecholesterinester (erhältlich gemäß Chemical Abstracts 97: 150571d, ibid. 93: 120270e), 5.1 g Methacrylsäureanhydrid und 0.4 g p-Toluolsulfonsäure wurden in 10 ml Toluol gelöst und 30 min auf 100° C erwärmt. Nach dem Abkühlen wurde das Produkt mit Hexan ausgefällt und aus Ethanol umkristallisiert. Die thermodynamischen Daten sind in Tabelle 1 zusammengefaßt.

**Tabelle 1**

| Beispiel | D | E |
|---|---|---|
| Glaspunkt* [°C] | -26 | 63 |
| Klärpunkt* [°C] | 67 | 152 |

| | | |
|---|---|---|
| * bestimmt unter Zusatz von 500 ppm p-tert-Butylbrenzcatechin | | |

### Beispiel 1

### Polyorganosiloxane mit acryl- oder methacrylsäurehaltigen mesogenen Seitengruppen

a) Eine Lösung aus 259 g 4-(Prop-2-en-1-oxy)benzoesäurecholesterinester (erhältlich gemäß DE-A 31 10 048), 162 g 4-(Prop-2-en-1-oxy) benzoesäure (4-trimethylsiloxyphenyl)ester (erhältlich gemäß C.) und 56.9 g Pentamethylcyclopentasiloxan in 400 ml Toluol wurde in Gegenwart von 24 mg Dicyclopentadienplatindichlorid 1 h und nach Zusatz einer Lösung von 1.2 g NaOH in 50 ml Ethanol weitere 7 h unter Rückfluß gekocht, um den Silylether zu spalten. Die Reaktionsmischung wurde auf 1/3 ihres Volumens eingeengt, mit 7.5 g p-Toluolsulfonsäure und 154 g Methacrylsäureanhydrid versetzt und 1 h auf 100° C erwärmt. Nach dem Abdestillieren der flüchtigen Bestandteile wurde zweimal aus Methylenchlorid / Ethanol umkristallisiert. Die physikalischen und thermodynamischen Daten sind in Tabelle 2 zusammengefaßt.
b) Zu einer Lösung von 1.76 g Hexamethylcyclohexasiloxan und 3 mg Dicyclopentadienplatindichlorid in 40 ml Toluol wurde eine Lösung aus 8.0 g 4-(Prop-2-en-1-oxy)benzoesäurecholesterinester und (siehe Beispiel 1 a)) und 5.0 g 4-Trimethylsilyloxybenzoesäure-4-(prop-2-en-1-oxy) phenylester (erhältlich gemäß C.) in 40 ml Toluol bei 80° C zugetropft und anschließend 30 min unter Rückfluß gekocht. Nach Zusatz von 10 ml Ethanol und 0.2 g Kaliumhydroxyd wurde 20 min unter Rückfluß gekocht und so der Silylether gespalten. Anschließend wurde die Lösung auf 1/3 ihres Volumens eingeengt, mit 2.0 g p-Toluolsulfonsäure und 9.2 g Acrylsäureanhydrid versetzt und nochmals 30 min unter Rückfluß gekocht. Zur Reinigung des Rohproduktes wurde zweimal aus Toluol / Ethanol umgefällt. Die physikalischen und thermodynamischen Daten sind in Tabelle 2 zusammengefaßt.
c) Zu einer Lösung von 3.33 g Polymethyl-hydrogen-siloxan (Viskosität: 16 mm/s bei 25°C) und 5 mg Dicyclopentadienplatindichlorid in 60 ml Toluol wurde eine Lösung aus 15.2 g 4-(Prop-2-en-1-oxy)benzoesäurecholesterinester (siehe Beispiel 1 a)) und 9,5 g 4-Trimethylsilyloxybenzoesäure-4-(prop-2-en-1-oxy)phenylester (gemäß C. herstellbar) in 60 ml Toluol bei 80° C zugetropft und anschließend 30 min unter Rückfluß gekocht. Nach Zusatz von 10 ml Ethanol und 0.2 g Kaliumhydroxyd wurde 20 min unter Rückfluß gekocht und so der Silylether gespalten. Anschließend wurde die Lösung auf 1/3 ihres Volumens eingeengt, mit 2.0 g p-Toluolsulfonsäure und 8.5 g Methacrylsäureanhydrid versetzt und nochmals 30 min unter Rückfluß gekocht. Zur Reinigung des Rohproduktes wurde zweimal aus Toluol / Ethanol umgefällt. Die physikalischen und thermodynamischen Daten sind in Tabelle 2 zusammengefaßt.
d) Eine Lösung aus 2.0 g 4-(Prop-2-en-1-oxy)benzoesäure-4-cyanophenylester (erhältlich gemäß Chemical Abstracts 97, 110 521f bzw. der dort referierten Literaturstelle), 5.72 g 4-Trimethylsilyloxybenzoesäure-4-(prop-2-en-1-oxy)phenylester (erhältlich gemäß C.), 1.43 g Hexamethylcyclohexasiloxan und 2 mg Dicyclopentadienplatindichlorid in 20 ml Toluol wurde 30 min unter Rückfluß gekocht. Nach Zusatz von 10 ml Ethanol und 0.2 g Kaliumhydroxyd wurde 20 min unter Rückfluß gekocht und so der Silylether gespalten. Anschließend wurde die Lösung auf 1/3 ihres Volumens eingeengt, mit 2.0 g p-Toluolsulfonsäure und 15.4 g Methacrylsäureanhydrid versetzt und nochmals 30 min unter Rückfluß gekocht. Nach dem Erkalten wurde zweimal aus Toluol / Ethanol umgefällt. Die physikalischen und thermodynamischen Daten sind in Tabelle 2 zusammengefaßt.
e) Eine Lösung von 3.28 g 4-(Prop-2-en-1-oxy)benzoesäurecholesterinester (siehe Beispiel 1 a)), 4.62 g 4-(Prop-2-en-1-oxy)benzoesäure-(4,4′-biphenyl)ester (erhältlich gemäß DE-A 31 10 048), 2.28 g 6-Trimethylsiloxyhexen (erhältlich durch Umsetzung von 1-Hexenol-6 mit Hexamethyldisilazan), 3 mg Dicyclopentadienplatindichlorid und 2.20 g Polymethyl-hydrogen-siloxan (mittlerer Polymerisationsgrad 8) in 10 ml Toluol wurde 30 Minuten unter Rückfluß gekocht. Zur Spaltung des Silylethers wurden 10 ml Ethanol und ein Tropfen conc. HCl zugesetzt, die Mischung 1 Stunde refluxiert und schließlich auf 1/3 ihres Volumens eingeengt. Anschließend wurde mit 0.15 g p-Toluolsulfonsäure und 6.20 g Methacrylsäureanhydrid versetzt und nochmals 30 min unter Rückfluß gekocht. Nach dem Erkalten wurde zweimal aus Toluol / Ethanol umgefällt. Die physikalischen und thermodynamischen Daten sind in Tabelle 2 zusammengefaßt.

**Tabelle 2**

| Beispiel | | 1a | 1b | 1c | 1d | 1e |
|---|---|---|---|---|---|---|
| vernetzbare Seitengruppen | [Mol-%] | 50 | 50 | 50 | 70 | 40 |
| Reflexionsmaximum | [nm] | 510 | 630 | 676 | -- | 420 |
| Trübung+ | [% ] | 0 | 0 | 0 | 0 | 0 |
| Glaspunkt* | [°C] | 48 | 60 | 53 | 25 | 4 |
| Klärpunkt* | [°C] | 190 | 199 | 195 | 94 | 90 |

| | | | | | | |
|---|---|---|---|---|---|---|
| + bestimmt durch Messung der Transmission bei 800 nm | | | | | | |
| * bestimmt unter Zusatz von 500 ppm t-Butylbrenzcatechin | | | | | | |

### Beispiel 2

### Herstellung von Formulierungen, die zur Vernetzung geeignet sind.

a) 4.0 g des methacrylierten Polymers nach Beispiel 1a, 1,0 g 4-Methacryloxybenzoesäurecholesterinester (erhältlich gemäß E.), 1.0 g 4-Methacryloxybenzoesäure-4-(prop-2-en-1-oxy(phenylester (erhältlich gemäß D.) und 200 ppm p-tert-Butylbrenzkatechin werden in Methylenchlorid gelöst und eingeengt. Die physikalischen und thermodynamischen Daten sind in Tabelle 3 zusammengefaßt.
b) 2.0 g des methacrylierten Polymers nach Beispiel 1c, 0.2 g 4-Methacryloxybenzoesäurecholesterinester (erhältlich gemäß E.), 0.6 g 4-Methacryloxybenzoesäure-4-(prop-2-en-1-oxy)phenylester (erhältlich gemäß D.) und 200 ppm p-tert-Butylbrenzkatechin wurden in Methylenchlorid gelöst und eingeengt. Die physikalischen und thermodynamischen Daten sind in Tabelle 3 zusammengefaßt.
c) 2.0 g des methacrylierten Polymers nach Beispiel 1d, 0.8 g 4-Methacryloxybenzoesäure-4-(prop-2-en-1-oxy)phenylester (erhältlich gemäß D.) und 200 ppm p-tert-Butylbrenzkatechin wurden in Methylenchlorid gelöst und eingeengt. Die physikalischen und thermodynamischen Daten sind in Tabelle 3 zusammengefaßt.

**Tabelle 3**

| Beispiel | | 2a | 2b | 2c |
|---|---|---|---|---|
| Reflexionsmaximum | [nm] | 592 | 536 | -- |
| Glaspunkt* | [°C] | 7 | 14 | 14 |
| Klärpunkt* | [°C] | 152 | 162 | 74 |

| | | | | |
|---|---|---|---|---|
| * bestimmt unter Zusatz von 500 ppm p-tert-Butylbrenzcatechin (erhältlich bei Janssen Chimica, D-4054 Nettetal 2) | | | | |

### Beispiel 3

Eine Mischung gemäß Beispiel 2 oder das Polyorganosiloxan gemäß Beispiel 1e) wurde mit 3 Gew.-% 2-Methyl-1-(4-(methylthio)phenyl)-2-morpholinpropanon-1 (Irgacure 907, Ciba-Geigy Marienberg GmbH, D-6140 Bensheim 1), 0.5 Gew.-% Isopropenylthioxanthon (Quantacure ITX, Deutsche Shell Chemie GmbH, D-6236 Eschborn/Ts.). 500 ppm p-tert-Butylbrenzkatechin und 5 Gew.-% Hexandioldimethacrylat versetzt, anschließend mit einem Rakel bei 80° C ein 20 µ dicker Film auf eine Glasplatte ausgestrichen und 3 s einer UV-Strahlung ausgesetzt, die durch eine 80 W/cm Quecksilbermitteldrucklampe erzeugt wurde. Es entstand jeweils ein selbst im heißen Zustand klebfreier glatter Film, der eine Reflexionsfarbe der cholesterischen Phase und eine Trübung nach Tabelle 4 aufwies.

**Tabelle 4**

| Zusammensetzung gemäß | | 2a | 2b | 2c | 2e |
|---|---|---|---|---|---|
| Beispiel vernetzbare Seitengruppen | [Mol-%] | 50 | 50 | 70 | 40 |
| Reflexionsmaximum | [nm] | 573 | 519 | -- | 410 |
| Halbwertsbreite* | [nm] | 110 | 115 | -- | 60 |
| Trübung+ | [% ] | 0 | 0 | 0 | 0 |

| | | | | | |
|---|---|---|---|---|---|
| + bestimmt durch Messung der Transmission bei 800 nm | | | | | |
| * bestimmt durch Messung des rechts circular polarisierten Lichtanteils in Transmission | | | | | |

### Vergleichsbeispiele

### Einstufige Synthese von methacrylierten flüssigkristallinen Polyorganosiloxanen

a) 2.25 g 4-(Prop-2-en-1-oxy)benzoesäurecholesterinester (siehe Beispiel 1a)), 1.13 g 4-(Prop-2-en-1-oxy)-benzoesäure-(4-methoxyphenyl)ester (erhältlich gemäß DE-A 31 19 459), 0.34 g 4-Methacryloxybenzoesäure-4-(prop-2-en-1-oxy)phenylester (erhältlich gemäß D.) und 0.60 g Tetramethylcyclotetrasiloxan wurden in 20 ml Toluol gelöst, mit 20 mg Dicyclopentadienplatindichlorid versetzt und 10 min unter Rückfluß gekocht. Nach dem Einengen wurde das Produkt wie in Beispiel 4 beschrieben mit Fotoinitiatoren, Reaktivverdünnern und Inhibitoren versetzt und mittels UV-Licht vernetzt. Die Lage sowie die Halbwertsbreite des Reflexionsmaximums und die Trübung der Probe sind in Tabelle 3 aufgeführt. Die Probe ergab beim Rakeln einen glatten klaren Film.
b) Es wurden 2.25 g 4-(Prop-2-en-1-oxy)benzoesäurecholesterinester, 0.85 g 4-(Prop-2-en-1-oxy)benzoesäure-(4-methoxyphenyl)ester, 0.68 g 4-Methacryloxybenzoesäure-4-(prop-2-en-1-oxy)phenylester und 0.60 g Tetramethylcyclotetrasiloxan nach Vergleichsbeispiel 1a umgesetzt, vernetzt und charakterisiert. Die Probe ergab beim Rakeln einen glatten klaren Film.
c) Es wurden 2.25 g 4-(Prop-2-en-1-oxy)-benzoesäurecholesterinester, 0.57 g 4-(Prop-2-en-1-oxy)-benzoesäure-(4-methoxyphenyl)ester, 1.01 g 4-Methacryloxybenzoesäure-4-(prop-2-en-1-oxy)phenylester und 0.60 g Tetramethylcyclotetrasiloxan nach Vergleichsbeispiel 1a umgesetzt, vernetzt und charakterisiert. Die Probe ergab beim Rakeln einen etwas rauhen, leicht trüben Film.
d) Es wurden 2.25 g 4-(Prop-2-en-1-oxy)benzoesäurecholesterinester, 0.28 g 4-(Prop-2-en-1-oxy) benzoesäure-(4-methoxyphenyl)ester, 1.35 g 4-Methacryloxybenzoesäure-4-(prop-2-en-1-oxy)phenylester und 0.60 g Tetramethylcyclotetrasiloxan nach Vergleichsbeispiel 1a umgesetzt, vernetzt und charakterisiert. Die Probe ergab beim Rakeln einen rauhen trüben Film.
e) Es wurden 2.25 g 4-(Prop-2-en-1-oxy)benzoesäurecholesterinester, 1.69 g 4-Methacryloxybenzoesäure-4-(prop-2-en-1-oxy)phenylester und 0.60 g Tetramethylcyclotetrasiloxan nach Vergleichsbeispiel a umgesetzt, vernetzt und charakterisiert. Die Probe ergab beim Raklen einen sehr rauhen trüben Film.

**Tabelle 5**

| Vergleichsbeispiel | | a | b | c | d | e |
|---|---|---|---|---|---|---|
| vernetzbare Seitengruppen | [Mol-%] | 10 | 20 | 30 | 40 | 50 |
| Reflexionsmaximum | [nm] | 590 | 570 | 550 | 530 | 500 |
| Halbwertsbreite* | [nm] | 120 | 130 | 205 | 240 | >250 |
| Trübung+ | [%] | 0 | 0 | 7 | 10 | 14 |

| | | | | | | |
|---|---|---|---|---|---|---|
| + bestimmt bei 800 nm | | | | | | |
| * bestimmt durch Messung des rechts circular polarisierten Lichtanteils in Transmission | | | | | | |

## Patentansprüche

1. Verfahren zur Herstellung von Methacryloxy- und/oder Acryloxygruppen aufweisenden flüssigkristallinen Polyorganosiloxanen durch Umsetzung von Organosiloxanen und/oder zu Organosiloxanen kondensierbaren Organosilanen mit jeweils direkt an Siliciumatome gebundenen Wasserstoffatomen mit mesogene Gruppen aufweisenden Alkenen und/oder Alkinen, **dadurch gekennzeichnet**, daß man die genannten Organosiloxane zur Einführung der Methacryloxy- und/oder Acryloxygruppen in einem ersten Schritt mit Alken und/oder Alkin mit mindestens einer durch eine an sich bekannte Schutzgruppe geschützten nicht enolischen Hydroxylgruppe umgesetzt und in einem zweiten Schritt die genannte(n) Schutzgruppe(n) entfernt und die nunmehr freie(n) Hydroxylgruppe(n) auf an sich bekannte Weise mit (Meth)acryl-säure, deren Estern, Anhydriden und/oder Halogeniden verestert und gegebenenfalls die zu Organosiloxanen kondensierbaren Organosilane kondensiert.

2. Verfahren nach Anspruch 1, wobei als Organosiloxane mit direkt an Siliciumatome gebundenen Wasserstoffatomen solche eingesetzt werden, welche aus Einheiten der Formel (I) aufgebaut sind :
[RₚH_{q}SiO_{(4-p-q)/2}] **(I)**,
und/oder als zu Organosiloxanen kondensierbare Organosilane mit direkt an Siliciumatome gebundenen Wasserstoffatomen solche der Formel (VI)
RᵣHₛSiY₍₄₋ᵣ₋ₛ₎ **(VI)**
oder deren Mischungen eingesetzt werden, wobei in den obigen Formeln (I) und (VI)
**R** gleiche oder verschiedene, gegebenenfalls substituierte C₁-bis C₁₈-Kohlenwasserstoffreste,
**p** eine ganze Zahl im Wert von 0 bis 3 und einem durchschnittlichen Wert von 1,8 bis 2,2,
**q** eine ganze Zahl im Wert von 0 bis 3 mit einem durchschnittlichen Wert, der so bemessen ist, daß mindestens drei direkt an Siliciumatome gebundene Wasserstoffatome pro Molekül zugegen sind, und die Summe von p und q maximal 3 beträgt,
**Y** eine kondensierbare Gruppe, vorzugsweise eine C₁-bis C₄-Alkoxygruppe oder ein Halogenatom,
**r** eine ganze Zahl im Wert von 0 bis 3,
**s** eine ganze Zahl im Wert von 0 bis 3, mit einem durchschnittlichen Wert von mindestens 0,1 und die Summe von r und s maximal 3 beträgt, bedeutet

3. Verfahren nach einem der Ansprüche 1 oder 2, wobei als mesogene Gruppen aufweisende Alkene bzw. Alkine der Formel (VII) eingesetzt werden
CₙHₘ-(X¹ₐ-A¹_{b}-A²_{c})_{d}-Zₑ-(-X²_{f}-A³_{g}-A⁴ₕ-)ᵢ-A⁵ₖ **(VII)**,
worin
**n** eine ganze Zahl im Wert von 1 bis 20,
**m** den Wert von 2n besitzt, oder, falls n mindestens 2 bedeutet, auch den Wert von (2n-2) bedeuten kann,
**X¹** und **X²** gleiche oder verschiedene zweiwertige Reste aus der Gruppe -O-, -COO-, -CONH-, -CO-, -S-, -C≡C-, -CH=CH-, -CH=N-, -N=N- und -N=N(O)-,
**A¹, A², A³** und **A⁴** gleiche oder verschiedene zweiwertige Reste, nämlich 1,4-Phenylen-, 1,4-Cyclohexylenreste, substituierte Arylene mit 1 bis 10 Kohlenstoffatomen, substituierte Gycloalkylene mit 1 bis 10 Kohlenstoffatomen und Heteroarylen mit 1 bis 10 Kohlenstoffatomen,
**Z** gleiche oder verschiedene zwei- bis vierwertige Benzol-, Cyclohexan- oder Cyclopentanreste,
**A⁵** gleiche oder verschiedene, gesättigte oder olefinisch ungesättigte Alkyl-, Alkoxy- oder Cycloalkylreste mit jeweils 1 bis 16 Kohlenstoffatomen, Cholestanreste, Cholesterylreste, Halogenatome, Wasserstoffatome, Hydroxyl-, Nitril- und Trialkylsiloxygruppen, deren Alkylreste jeweils 1 bis 8 Kohlenstoffatome besitzen,
**a, b, c, d, f, g, h, i** und **k** jeweils gleiche oder verschiedene ganze Zahlen im Wert von 0 bis 3, wobei die Summe a+b+c+d+e+f+g+h+i+k mindestens 2 und die Summe von d und i maximal 4 beträgt und
**e** eine Zahl im Wert von 0 oder 1,
bedeuten.

4. Verfahren nach einem der Ansprüche 1,2 oder 3, wobei als Alken und/oder Alkin mit mindestens einer durch eine an sich bekannte Schutzgruppe geschützte nicht enolische Hydroxylgruppe eingesetzt wird ein Alken mit bis zu 30 Kohlenstoffatomen und einer durch eine Schutzgruppe blockierten nicht enolischen Hydroxylgruppe, wobei das Alken neben Kohlenstoffatomen und Wasserstoffatomen noch weitere Atome besitzen kann, vorzugsweise Sauerstoffatome, und diese Sauerstoffatome auch die Kohlenstoffkette des Alkens in Art einer Ether- und/oder Esterbindung unterbrechen können.

5. Methacryloxy- und/oder Acryloxygruppen aufweisende flüssigkristalline Polyorganosiloxane, herstellbar gemäß dem Verfahren nach einem der Ansprüche 1, 2, 3 oder 4.

6. Zusammensetzungen enthaltend Polyorganosiloxane gemäß Anspruch 5 und gegebenenfalls zusätzlich Verbindungen der Formel (XIII):
CH₂=CQ-COO-(R'''')ᵤ-(X¹ₐ-A¹_{b}-A²_{c})_{d}-Zₑ-(-X²_{f}-A³_{g}-A⁴ₕ-)ᵢ-A⁶ₗ **(XIII),**
worin
**A⁶** eine der Bedeutungen von A⁵ besitzt oder ein Rest der Formel CH₂=CQ-COO-(R'''')ᵤ- ist,
**Q** ein Wasserstoffatom oder eine Methylgruppe bedeutet,
**R''''** gleiche oder verschiedene zweibindige Reste aus der Gruppe -CH₂-, -O-CH₂-, -O-CH₂-CH₂-, -O-CH₂-CH₂-CH₂-sind,
**u** eine ganze Zahl im Wert von 0 bis 20,
**l** 0 oder 1 ist und
X¹, X², A¹, A², A³, A⁴, A⁵, a, b, c, d, e, f, g, h, i und k die in Anspruch 3 angegebene Bedeutung haben.

7. Verfahren zur Vernetzung von Polyorganosiloxanen gemäß Anspruch 5 oder von Zusammensetzungen gemäß Anspruch 6 in Anwesenheit von Photoinitiatoren und/oder Photosensibilisatoren durch UV-Licht.

8. Dreidimensional vernetzte flüssigkristalline Polyorganosiloxane, herstellbar gemäß dem Verfahren nach Anspruch 7.

9. Verwendung der Polyorganosiloxane gemäß Anspruch 8 zur Herstellung von Membranen zum Trennen von Stoffgemischen, zur gezielten Wirkstoffreigabe, zur optischen Anzeige elektromagnetischer Felder, auf dem Gebiet der Informationsspeicherung, der elektrographischen Verfahren, der Lichtmodulation, als Bestandteil von Polarisationsfolien, optischen Filtern, Reflektoren, in Beschichtungen, als Lackpigmente und stationäre Phasen für die Gas- und Flüssigchromatographie.

10. Verbindungen der Formel (XV) 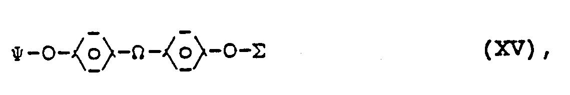 worin
Ψ ein Rest der Formel CH₂=CH-CH₂-,
Ω ein Carboxylrest der Formeln -COO- oder -OCO- und
Σ eine C₁- bis C₆-Tri-(Kohlenwasserstoff)silylgruppe sind.

## Claims

1. Process for the preparation of liquid-crystalline polyorganosiloxanes having methacryloxy and/or acryloxy groups by the reaction of organosiloxanes and/or organosilanes which can be condensed to form organosiloxanes in each case having hydrogen atoms bound directly to silicon atoms, with alkenes and/or alkynes having mesogenic groups, characterised in that in order to introduce the methacryloxy and/or acryloxy groups the organosiloxanes mentioned are reacted in a first step with alkene and/or alkyne having at least one non-enolic hydroxyl group protected by a protective group known per se, and in a second step the protective group(s) mentioned is/are removed and the hydroxyl group(s) which are now free are esterified in a manner known per se with (meth)acrylic acid, esters, anhyrides and/or halides thereof and optionally the organosilanes which can be condensed to organosiloxanes are condensed.

2. Process according to Claim 1, those organosiloxanes having hydrogen atoms bound directly to silicon atoms being used, which are constructed from units of the formula (I):
[RₚH_{q}SiO_{(4-p-q)/2}] (I)
and/or those organosilanes of the formula (VI), having hydrogen atoms bound directly to silicon atoms, which are condensable to organosiloxanes being used, or mixtures thereof, in which in the above formulae (I) and (VI)
RᵣHₛSiY₍₄₋ᵣ₋ₛ₎ (VI)
R are identical or different, optionally substituted C₁ to C₁₈ hydrocarbon radicals,
p is an integer with a value from 0 to 3 and an average value of 1.8 to 2.2,
q is an integer with a value from 0 to 3 and with an average value which is designed in such a way that at least three hydrogen atoms directly bound to silicon atoms are present per molecule, and the sum of p and q is a maximum of 3,
Y denoting a condensable group, preferably a C₁ to C₄ alkoxy group or a halogen atom,
r denoting an integer with a value from 0 to 3,
s denoting an integer with a value from 0 to 3, having an average value of at least 0.1 and the sum of r and s being a maximum of 3.

3. Process according to one of Claims 1 or 2, alkenes or alkynes, having mesogenic groups, of the formula (VII) being used
CₙHₘ-(X¹ₐ-A¹_{b}-A²_{c})_{d}-Zₑ-(-X²_{f}-A³_{g}-A⁴ₕ-)ᵢ-A⁵ₖ **(VII),**
in which
n denotes an integer with a value from 1 to 20,
m has the value 2n, or, if n is at least 2, can also have the value of (2n-2),
X¹ and X² denote identical or different divalent radicals from the group -O-, -COO-, -CONH-, -CO-, -S-, -C≡C, -CH=CH-, -CH=N-, -N=N- and -N=N(O)-,
A¹, A², A³ and A⁴ denote identical or different divalent radicals, namely 1,4-phenylene, 1,4-cyclohexylene radicals, substituted arylenes having 1 to 10 carbon atoms, substituted cycloalkylenes having 1 to 10 carbon atoms and heteroarylene having 1 to 10 carbon atoms,
Z denotes identical or different divalent to tetravalent benzene, cyclohexane or cyclopentane radicals,
A⁵ denotes identical or different, saturated or olefinically unsaturated alkyl, alkoxy or cycloalkyl radicals in each case having 1 to 16 carbon atoms, cholestane radicals, cholesteryl radicals, halogen atoms, hydrogen atoms, hydroxyl, nitrile and trialkylsiloxy groups, the alkyl radicals of which in each case have 1 to 8 carbon atoms,
a, b, c, d, f, g, h, i and k denote in each case identical or different integers with a value from 0 to 3, the sum a+b+c+d+e+f+g+h+i+k is at least 2 and the sum of d and i is a maximum of 4 and
e denotes a number with a value of 0 or 1.

4. Process according to any of Claims 1, 2 or 3, in which as alkene and/or alkyne having at least one non-enolic hydroxyl group protected by a protective group known per se, an alkene is used having up to 30 carbon atoms and a non-enolic hydroxyl group blocked by a protective group, it being possible for the alkene to have other atoms in addition to carbon atoms and hydrogen atoms, preferably oxygen atoms, and these oxygen atoms may also interrupt the carbon chain of the alkene in the manner of an ether linkage and/or ester linkage.

5. Liquid-crystalline polyorganosiloxane having methacryloxy groups and/or acryloxy groups, which can be prepared according to the process according to any of Claims 1, 2, 3 or 4.

6. Composition containing polyorganosiloxanes according to Claim 5 and optionally additionally compounds of the formula (XIII):
CH₂=CQ-COO-(R'''')ᵤ-(X¹ₐ-A¹_{b}-A²_{c})_{d}-Zₑ-(-X²_{f}-A³_{g}-A⁴ₕ-)ᵢ-A⁶ₗ (XIII),
in which
A⁶ has one of the meanings of A⁵ or is a radical of the formula CH₂=CQ-COO-(R'''')ᵤ-,
Q denotes a hydrogen atom or a methyl group,
R'''' are identical or different divalent radicals from the group -CH₂-, -O-CH₂-, -O-CH₂-CH₂-, -O-CH₂-CH₂-CH₂-,
u is an integer with a value from 0 to 20,
l is 0 or 1 and
X¹, X², A¹, A², A³, A⁴, A⁵, a, b, c, d, e, f, g, h, i and k have the meaning given in Claim 3.

7. Process for the crosslinking of polyorganosiloxanes according to Claim 5 or of compositions according to Claim 6 by UV light in the presence of photoinitiators and/or photosensitizers.

8. A three-dimensionally crosslinked liquid-crystalline polyorganosiloxane, which can be prepared according to the process according to Claim 7.

9. Use of the polyorganosiloxanes according to Claim 8 for the production of membranes for the separation of mixtures of substances, for the selective release of active ingredients, for optical displays of electromagnetic fields, in the field of information storage, of electrographic processes, of light modulation, as a component of polarising films, optical filters, reflectors, in coatings, as lake pigments and stationary phases for gas chromatography and liquid chromatography.

10. Compound of the formula (XV) 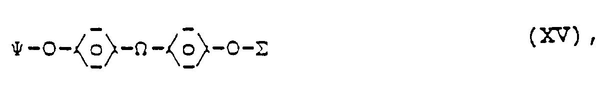 in which
Ψ is a radical of the formula CH₂=CH-CH₂-,
Ω is a carboxyl radical of the formulae -COO- or -OCO- and
Σ is a C₁ to C₆ tri(hydrocarbon)silyl group.

## Revendications

1. Procédé de préparation de polyorganosiloxanes sous forme de cristaux liquides comportant des groupes méthacryloxy et/ou acryloxy par réaction d'organosiloxanes et/ou d'organosilanes condensables en organosiloxanes, ayant dans chaque cas des atomes d'hydrogène liés directement à des atomes de silicium, avec des alcènes et/ou des alcynes comportant des groupes mésogènes, caractérisé en ce que, pour introduire les groupes méthacryloxy et/ou acryloxy, on fait réagir dans une première étape lesdits organosiloxanes avec un alcène et/ou un alcyne ayant au moins un groupe hydroxyle non énolique protégé par un groupe protecteur connu en soi, et, dans une seconde étape, on élimine le ou lesdits groupes protecteurs et on estérifie de façon connue en soi le ou les groupes hydroxy désormais libres avec l'acide (méth)acrylique, ses esters, anhydrides et/ou halogénures et on condense éventuellement les organosilanes condensables en organosiloxanes.

2. Procédé selon la revendication 1, dans lequel on utilise comme organosiloxanes ayant des atomes d'hydrogène liés directement à des atomes de silicium ceux qui sont constitués par des unités de formule (I)
[RₚH_{q}SiO_{(4-p-q)/2}] (I),
et/ou comme organosilanes condensables en oprganosiloxanes et ayant des atomes d'hydrogène directement liés à des atomes de silicium ceux de formule (VI)
RᵣHₛSiY₍₄₋ᵣ₋ₛ₎ (VI)
ou leurs mélanges, où, dans les formules (I) et (VI)
R représente des restes d'hydrocarbures en C₁ à C₁₈ éventuellement substitués identiques ou différents,
p est un nombre entier ayant une valeur de 0 à 3 et une valeur moyenne de 1,8 à 2,2;
q est un nombre entier ayant une valeur de 0 à 3 et une valeur moyenne qui est calculée de façon qu'il y ait au moins trois atomes d'hydrogène par molécule liés directement à des atomes de silicium, et que la somme de p et q s'élève au maximum à 3,
Y représente un groupe condensable, de préférence un groupe alcoxy en C₁-C₄ ou un atome d'halogène,
r est un nombre entier d'une valeur de 0 à 3,
s est un nombre entier d'une valeur de 0 à 3, avec une valeur moyenne d'au moins 0,1, et la somme de r et s est au maximum de 3.

3. Procédé selon l'une des revendications 1 ou 2, dans lequel on utilise comme alcènes ou alcynes comportant des groupes mésogènes ceux de formule (VII):
CₙHₘ-(X¹ₐ-A¹_{b}-A²_{c})_{d}-Zₑ-(-X²_{f}-A³_{g}-A⁴ₕ-)ᵢ-A⁵ₖ **(VII)**
dans laquelle
n est un nombre entier d'une valeur de 1 à 20,
m prend la valeur 2n ou, au cas où n est au moins 2, m peut aussi prendre la valeur (2n-2),
X¹ et X² représentent des restes divalents identiques ou différents du groupe -O-, -COO-, -CONH-, -CO-, -S-, -C≡C-, -CH=CH-, -CH=N-, -N=N- et -N=N(O)-,
A¹, A², A³ et A⁴ représentent des restes divalents identiques ou différents, à savoir le reste 1,4-phénylène, 1,4-cyclohexylène, des arylènes substitués ayant jusqu'à 10 atomes de carbone, des cycloalkylènes substitués ayant jusqu'à 10 atomes de carbone et des hétéroarylènes ayant jusqu'à 10 atomes de carbone,
Z représente des restes benzène, cyclohexane ou cyclopentane di- à tétravalents identiques ou différents,
A⁵ représente des restes alkyle, alcoxy ou cycloalkyle identiques ou différents, saturés ou à insaturation oléfinique, ayant chacun 1 à 16 atomes de carbone, des restes de cholestane, des restes cholestéryle, des atomes d'halogène, des atomes d'hydrogène, des groupes hydroxyle, nitrile et trialkylsiloxy dont les restes alkyle ont à chaque fois 1 à 8 atomes de carbone,
a, b, c, d, f, g, h, i et k sont chacun des nombres entiers identiques ou différents ayant une valeur de 0 à 3, la somme a + b + c + d + e + f + g + h + i + k s'élève au moins à 2 et la somme de d et i est au maximum de 4, et
e est un nombre d'une valeur de 0 ou 1.

4. Procédé selon l'une des revendications 1,2 ou 3, dans lequel on utilise comme alcène et/ou alcyne ayant au moins un groupe hydroxyle non énolique protégé par un groupe protecteur connu en soi un alcène ayant jusqu'à 30 atomes de carbone et un groupe hydroxyle non énolique bloqué par un groupe protecteur, l'alcène pouvant comporter, en plus des atomes de carbone et des atomes d'hydrogène, d'autres atomes, de préférence des atomes d'oxygène, ces atomes d'oxygène pouvant aussi interrompre la chaîne carbonée de l'alcène à la manière d'une liaison éther et/ou ester.

5. Polyorganosiloxanes sous forme de cristaux liquides comprenant des groupes méthacryloxy et/ou acryloxy pouvant être préparés par le procédé selon l'une des revendications 1, 2, 3 ou 4.

6. Compositions contenant des polyorganosiloxanes selon la revendication 5 et en plus éventuellement des composés de formule (XIII):
CH₂=CQ-COO-(R'''')ᵤ-(X¹ₐ-A¹_{b}-A²_{c})_{d}-Zₑ-(-X²_{f}-A³_{g}-A⁴ₕ-)ᵢ-A⁶ₗ (XIII)
dans laquelle
A₆ a l'une des significations de A₅ ou est un reste de formule
CH₂=CQ-COO-(R'''')ᵤ-,
Q est un atome d'hydrogène ou un groupe méthyle,
R'''' représente des restes divalents identiques ou différents issus du groupe -CH₂-, - O-CH₂-, -O-CH₂-CH₂-, -O-CH₂-CH₂-CH₂-,
u est un nombre entier d'une valeur de 0 à 20,
l est 0 ou 1 et
X¹, X², A¹, A², A³, A⁴, A⁵, a, b, c, d, e, f, g, h, i et k ont les significations données dans la revendication 3.

7. Procédé de réticulation de polyorganosiloxanes selon la revendication 5 ou de compositions selon la revendication 6 en présence de photoinitiateurs et/ou de photosensibilisants au moyen de la lumière UV.

8. Polyorganosiloxanes sous forme de cristaux liquides réticulés en trois dimensions, pouvant être obtenus par le procédé selon la revendication 7.

9. Utilisation des polyorganosiloxanes selon la revendication 8 pour la préparation de membranes pour la séparation de mélanges de substances, pour la libération orientée de substances, pour l'affichage optique de champs électromagnétiques, dans le domaine de la mémorisation des informations, des procédés électrographiques, de la modulation de la lumière, comme constituant de feuilles de polarisation, de filtres optiques, de réflecteurs, dans des revêtements, comme pigments de peintures et comme phases stationnaires pour la chromatographie liquide et gazeuse.

10. Composés de formule (XV) 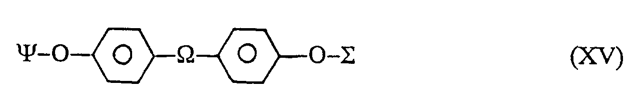 dans laquelle
Ψ représente un reste de formule CH₂=CH-CH₂-,
Ω représente un reste carboxyle de formule -COO- ou -OCO-, et
Σ représente un reste tri(hydrocarbure en C₁-C₆)silyle.
